# EUROPÄISCHE PATENTSCHRIFT

(11) **EP 3 695 902 B1**
(45) Veröffentlichungstag und Bekanntmachung des Hinweises auf die Patenterteilung: **01.09.2021**
(21) Anmeldenummer: 19157618.0
(22) Anmeldetag: 18.02.2019
(51) Int. Cl.: B01J 37/02, B01J 35/00, B01D 53/94

(54) **KATALYSATOR ZUR REDUKTION VON STICKOXIDEN**
CATALYST FOR REDUCING NITROGEN OXIDES
CATALYSEUR DESTINÉ À LA RÉDUCTION D'OXYDES D'AZOTE

(43) Veröffentlichungstag der Anmeldung: 19.08.2020
(73) Patentinhaber: UMICORE AG & CO. KG, 63457 Hanau-Wolfgang (DE)
(72) Erfinder: HOYER, Ruediger, 63755 Alzenau (DE); MUELLER, Elena, 64319 Pfungstadt (DE)

(56) Entgegenhaltungen:
- WO-A1-2017/134065
- WO-A1-2018/020049

## Beschreibung

Die vorliegende Erfindung betrifft einen Katalysator zur Reduktion von Stickoxiden, das im Abgas mager betriebener Verbrennungsmotoren enthalten ist.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoff-haltigen FeststoffTeilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Zur Entfernung der Stickoxide sind sogenannte Stickoxid-Speicherkatalysatoren, für die auch der Begriff "Lean NOx Trap" oder "LNT" üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.

Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu NO₂, sowie CO und HC zu CO₂ zu oxidieren und andererseits während der fetten Betriebsphasen, in denen der Stickoxid-Speicherkatalysator regeneriert wird, freigesetztes NO₂ zu Stickstoff zu reduzieren.

Ein weiteres Verfahren zur Entfernung von Stickoxiden aus Abgasen in Gegenwart von Sauerstoff ist die selektive katalytische Reduktion (SCR-Verfahren) mittels Ammoniak an einem geeigneten Katalysator. Bei diesem Verfahren werden die aus dem Abgas zu entfernenden Stickoxide mit Ammoniak zu Stickstoff und Wasser umgesetzt. Das als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Als SCR-Katalysatoren können beispielsweise bestimmte Metall-ausgetauschte Zeolithe verwendet werden, wobei je nach Anwendungsbereich insbesondere Eisen-ausgetauschten ß-Zeolithe und Kupfer-ausgetauschte kleinporige Zeolithe, zum Beispiel Chabazite, im Einsatz sind. Als SCR-Katalysatoren sind daneben sogenannte Mischoxid-Katalysatoren in Gebrauch. Dabei handelt es sich insbesondere um Vanadiumoxid, Wolframoxid und gegebenenfalls weitere Oxide enthaltende Verbindungen, die in der Regel als Trägeroxid Titandioxid enthalten.

Zur Erfüllung der Euro 6d und zukünftiger Abgasgesetzgebungen müssen Abgassysteme verwendet werden, die über einen großen Temperaturbereich hohe CO- und NOx-Konvertierungsraten zeigen. Solche Systeme können eine Kombination aus Stickoxid-Speicherkatalysatoren und SCR-Katalysatoren sein, wobei insbesondere der Stickoxid-Speicherkatalysator hohen Anforderungen genügen muss. So ist besonders bei Stadtfahrten, bei denen die Abgastemperaturen 200°C nicht übersteigen, eine effiziente NOx-Speicherung und -Umsetzung eine große Herausforderung. Außerdem muss der Stickoxid-Speicherkatalysator für eine effektive NOx-Konvertierung durch den SCR-Katalysator genügend NO₂ zur Verfügung stellen.

Es hat sich bereits in der Vergangenheit gezeigt, dass zum Beispiel Stickoxid-Speicherkatalysatoren dann bestmögliche Aktivität zeigen, wenn die unterschiedlichen Komponenten bzw. Funktionen des Katalysators räumlich getrennt sind und somit unerwünschte Wechselwirkungen vermieden werden.
So offenbart die WO2011/154913 einen Katalysator aus drei auf einem Katalysatorsubstrat übereinanderliegenden Schichten, wobei die unterste Schicht ein Stickoxidspeichermaterial, die mittlere Schicht ein Material zur Umsetzung von Stickoxiden und die obere Schicht einen Kohlenwasserstoff-Speicher enthalten.
Die WO2017/191099 beschreibt einen Katalysator, bei dem auf einem Tragkörper drei Materialzonen in bestimmter Weise angeordnet sind. Weitere Stickoxidspeicher-Katalysatoren aus mindestens zwei Schichten sind in EP0885650 A2, WO2009/158453A1, WO2012/029050 A1, WO2014/108362 A1, WO2017/134065 A1 und WO2017/144426 A1 offenbart.

Es sind aber künftig weiterentwickelte Stickoxidspeicher-Katalysatoren nötig, bei denen besonders NOx-Speicherung, NO₂-Bildung und Reduktionsvermögen weiter verbessert und aufeinander abgestimmt sind.

Die vorliegende Erfindung betrifft einen Stickoxid-Speicherkatalysator, der einen Tragköper und Washcoatschichten A, B, C und D umfasst, wobei
- Washcoatschicht A auf dem Tragkörper angeordnet ist und Ceroxid, eine Erdalkaliverbindung und/oder eine Alkaliverbindung sowie Platin oder Platin und Palladium im Gewichtsverhältnis > 5 :1 enthält;
- Washcoatschicht B auf Washcoatschicht A angeordnet ist und Ceroxid, sowie Platin oder Platin und Palladium im Gewichtsverhältnis > 5 :1 enthält und frei ist von Alkaliverbindungen und Verbindungen des Calciums, Strontiums und Bariums;
- Washcoatschicht C auf Washcoatschicht B angeordnet ist und auf Ceroxid geträgertes Palladium oder Palladium und Platin im Gewichtsverhältnis > 2:1, sowie Rhodium umfasst; und
- Washcoatschicht D auf Washcoatschicht C angeordnet ist und Platin oder Platin und Palladium umfasst.

In einer Ausführungsform der vorliegenden Erfindung ist Washcoatschicht B frei von Alkali- und Erdalkaliverbindungen.

In einer anderen Ausführungsform der vorliegenden Erfindung umfasst Washcoatschicht B Magnesiumoxid (MgO). In diesem Fall umfasst Washcoatschicht B Magnesiumoxid bevorzugt in Mengen von 3 bis 20 g/l, bezogen auf das Volumen des Tragkörpers.

In einer weiteren Ausführungsform des erfindungsgemäßen Stickoxid-Speicherkatalysators sind die Washcoatschichten A und B zu einer einzigen Schicht, die Ceroxid, eine Erdalkaliverbindung und/oder eine Alkaliverbindung sowie Platin oder Platin und Palladium im Gewichtsverhältnis > 5 :1 umfasst, zusammengefasst. Diese Washcoatschicht wird nachstehend AB genannt.

Das in den Washcoatschichten A, B und C eingesetzte Ceroxid kann handelsüblicher Qualität sein, d.h. einen Ceroxid-Anteil von 90 bis 100 Gew.-% aufweisen. Bevorzugt ist Ceroxid, das auch nach einer Kalzinierung von 6 Stunden bei 1150°C noch eine Oberfläche vom mindestens 10 m²/g aufweist. Ceroxid mit diesen Oberflächeneigenschaften ist bekannt und zum Beispiel in EP 1 527 018 B1 beschrieben.

In Ausführungsformen der vorliegenden Erfindung wird Ceroxid in der Washcoatschicht A in einer Menge von 110 bis 160 g/l, beispielsweise 125 bis 145 g/l, bezogen auf das Volumen des Tragkörpers, eingesetzt.
In der Washcoatschicht B wird Ceroxid in Mengen von 22 bis 120 g/l, beispielsweise 40 bis 100 g/l oder 45 bis 65 g/l, bezogen auf das Volumen des Tragkörpers eingesetzt.

In der Ausführungsform des erfindungsgemäßen Stickoxid-Speicherkatalysators, in der die Washcoatschichten A und B zu einer einzigen Washcoatschicht AB zusammengefasst sind, wird Ceroxid in Washcoatschicht AB in einer Menge von 132 bis 280 g/l, beispielsweise 165 bis 210 g/l, bezogen auf das Volumen des Tragkörpers, eingesetzt.

In Washcoatschicht C beträgt die Menge an Ceroxid insbesondere 20 bis 120 g/l, bevorzugt 40 bis 70g/l, bezogen auf das Volumen des Tragkörpers.

Als Erdalkaliverbindung in der Washcoatschicht A kommen insbesondere Oxide, Carbonate und/oder Hydroxide von Magnesium, Strontium und/oder Barium in Frage, besonders Magnesiumoxid, Bariumoxid und Strontiumoxid. Als Alkaliverbindung in der Washcoatschicht A kommen insbesondere Oxide, Carbonate und/oder Hydroxide von Lithium, Kalium und/oder Natrium in Frage.

In Ausführungsformen der vorliegenden Erfindung liegt die Erdalkali- bzw. Alkaliverbindung in Washcoatschicht A in Mengen von 10 bis 50 g/l, besonders 15 bis 20 g/l, berechnet als Erdalkali- bzw. Alkalioxid und bezogen auf das Volumen des Tragkörpers, vor.

In der Ausführungsform des erfindungsgemäßen Stickoxid-Speicherkatalysators, in der die Washcoatschichten A und B zu einer einzigen Washcoatschicht AB zusammengefasst sind, enthält diese die Erdalkali- bzw. Alkaliverbindung bevorzugt in Mengen von 10 bis 50 g/l, besonders 15 bis 20 g/l, berechnet als Erdalkali- bzw. Alkalioxid und bezogen auf das Volumen des Tragkörpers.

Washcoatschicht C umfasst in einer Ausführungsform der vorliegenden Erfindung eine Eisenverbindung. Die Eisenverbindung ist bevorzugt ein Eisenoxid, insbesondere Fe₂O₃. Eisen liegt in Washcoatschicht C insbesondere in Mengen von 1 bis 10 Gew.-%, bevorzugt 2 bis 7 Gew.-%, bezogen auf das Gewicht von Washcoatschicht C und gerechnet als Fe₂O₃, vor.

Die Eisenverbindung, sei sie Eisenoxid oder eine andere Eisenverbindung, dient bevorzugt nicht als Trägermaterial, weder für die Edelmetalle Platin, Palladium und Rhodium, noch für eine andere Komponente von Washcoatschicht C.

Washcoatschicht A umfasst Platin oder Platin und Palladium und ist bevorzugt frei von Rhodium. Sofern sie Platin und Palladium enthält ist das Gewichtsverhältnis Pt:Pd > 5:1 bevorzugt ≥ 8:1, beispielsweise 8:1 bis 20:1, beispielsweise 8:1, 10:1, 12:1, 14:1, 16:1, 18:1 oder 20:1.

Auch Washcoatschicht B umfasst Platin oder Platin und Palladium und ist bevorzugt frei von Rhodium. Sofern sie Platin und Palladium enthält ist das Gewichtsverhältnis Pt:Pd > 5:1 bevorzugt ≥ 8:1, beispielsweise 8:1 bis 20:1, beispielsweise 8:1, 10:1, 12:1, 14:1, 16:1, 18:1 oder 20:1.

Die Gehalte an Platin oder Platin und Palladium, sowie deren Gewichtsverhältnisse in Washcoatschicht A und Washcoatschicht B sind unabhängig voneinander

Übliche Platin-Beladungen für die Washcoatschichten A und B liegen im Bereich von 0,7 bis 1,5 g/l, die Palladium-Beladungen im Bereich von 0,035 bis 0,3 g/l, jeweils bezogen auf das Volumen des Tragkörpers.

Washcoatschicht C umfasst bevorzugt Palladium oder Palladium und Platin bevorzugt im Gewichts-verhältnis von 2:1 bis 8:1, bevorzugt 4:1 bis 6:1. Die Palladium- oder die Palladium- und Platin-Massenkonzentration bezogen auf die Menge an Ceroxid in der Washcoatschicht C beträgt üblicherweise 0,2 bis 1 %, bevorzugt 0,4 bis 0,6 %.
Daneben umfasst Washcoatschicht C auch Rhodium, bevorzugt in einer Menge von 0,003 bis 0,35 g/l, insbesondere 0,18 bis 0,26 g/l, jeweils bezogen auf das Volumen des Tragkörpers.
Washcoatschicht D umfasst Platin oder Platin und Palladium und ist bevorzugt frei von Rhodium. Sofern sie Platin und Palladium enthält ist das Gewichtsverhältnis Pt:Pd > 5:1 bevorzugt ≥ 8:1, beispielsweise 8:1 bis 18:1, beispielsweise 8:1, 10:1, 12:1 oder 14:1.

Das Verhältnis der Menge an Platin und Palladium in der Washcoatschicht D zu der Summe der Menge an Platin und Palladium in den Washcoatschichten A und B beträgt üblicherweise 0,3 - 1,2, bevorzugt 0,35 - 0,5.

Die Gesamtmenge an Edelmetall, d.h. von Platin, Palladium und gegebenenfalls Rhodium, im erfindungsgemäßen Stickoxid-Speicherkatalysator beträgt in Ausführungsformen der vorliegenden Erfindung 2,12 bis 7,1 g/l (60 bis 200 g/ft³), bezogen auf das Volumen des Tragkörpers.

Sowohl in der Washcoatschicht A, als auch in der Washcoatschicht B, als auch in Washcoatschicht D liegen die Edelmetalle Platin bzw. Platin und Palladium üblicherweise auf geeigneten Trägermaterialien vor. Als solche werden insbesondere Oxide mit einer BET-Oberfläche von 30 bis 250 m²/g, bevorzugt von 100 bis 200 m²/g auf (bestimmt nach DIN 66132) verwendet, beispielsweise Aluminiumoxid, Siliziumdioxid, Titandioxid, aber auch Mischoxide wie beispielsweise Aluminium-Silizium-Mischoxide und Cer-Zirkon-Mischoxide.
In Ausführungsformen der vorliegenden Erfindung wird als Trägermaterial für die Edelmetalle Platin bzw. Platin und Palladium Aluminiumoxid verwendet, insbesondere solches, das durch 1 bis 6 Gew.-%, insbesondere 4 Gew.-%, Lanthanoxid stabilisiert ist.

In Washcoatschicht C liegen die Edelmetalle Palladium und Platin auf Ceroxid geträgert vor, während Rhodium bevorzugt auf einem der oben genannten üblichen Trägermaterialien, also insbesondere Aluminiumoxid oder mit Lanthanoxid stabilisiertem Aluminiumoxid, vorliegt.

Es ist bevorzugt, wenn die Edelmetalle Platin bzw. Platin und Palladium und Rhodium lediglich auf einem oder mehreren der oben genannten Trägermaterialien geträgert sind und somit nicht mit allen Bestandteilen der jeweiligen Washcoatschicht in enger Berührung stehen. Insbesondere dient Eisen bevorzugt nicht als Träger für Palladium, Platin und Rhodium.

Die Gesamt-Washcoatbeladung des Tragkörpers beträgt in Ausführungsformen der vorliegenden Erfindung 300 bis 600 g/l, bezogen auf das Volumen des Tragkörpers.

In einer bevorzugten Ausführungsform betrifft die vorliegende Erfindung einen Stickoxid-Speicherkatalysator, der einen Tragköper und Washcoatschichten A, B, C und D umfasst, wobei
- Washcoatschicht A auf dem Tragkörper angeordnet ist und
   ∘ Ceroxid in einer Menge von 100 bis 160 g/l, bezogen auf das Volumen des Tragkörpers,
   ∘ Platin oder Platin und Palladium im Gewichtsverhältnis 10:1, und
   ∘ Magnesiumoxid und/oder Bariumoxid enthält;
- Washcoatschicht B auf Washcoatschicht A angeordnet ist und
   ∘ keine Alkaliverbindungen und keine Verbindungen des Calciums, Strontiums und Bariums,
   ∘ Platin oder Platin und Palladium im Gewichtsverhältnis 10:1, und
   ∘ Ceroxid in einer Menge von 45 bis 65 g/l, bezogen auf das Volumen des Tragkörpers, enthält;
• Washcoatschicht C auf Washcoatschicht B angeordnet ist und
   ∘ 40 bis 70 g/l Ceroxid, auf das
   ∘ Palladium und Platin in einer Menge von 0,16 bis 0,72 g/l, bezogen auf das Volumen des Tragkörpers, geträgert sind,
   ∘ Rhodium in einer Menge von 0,18 bis 0,26 g/l, bezogen auf das Volumen des Tragkörpers, und
   ∘ Fe₂O₃ in einer Menge von 2 bis 7 g/l, bezogen auf das Volumen des Tragkörpers, enthält; und
• Washcoatschicht D auf Washcoatschicht C angeordnet ist und
   ∘ Platin oder Platin und Palladium im Gewichtsverhältnis 10:1 enthält.

Die Aufbringung der katalytisch aktiven Washcoatschichten A, B, C und D auf den Tragkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.
Die dafür notwendigen Beschichtungssuspensionen können nach dem Fachmann bekannten Verfahren erhalten werden. So werden die Bestandteile der einzelnen Washcoatschichten, wie Ceroxid, Erdalkali-und/oder Alkaliverbindung, auf geeigneten Trägermaterialien geträgerte Edelmetalle, sowie Eisenverbindung in den entsprechenden Mengen in Wasser aufgeschlämmt und in einer geeigneten Mühle, insbesondere einer Kugelmühle, auf eine Teilchengröße von dso = 3 bis 5 µm gemahlen.

Die erfindungsgemäßen Stickoxid-Speicherkatalysatoren eignen sich in hervorragender Weise zur Konvertierung von NOₓ in Abgasen von Kraftfahrzeugen, die mit mager betriebenen Motoren, etwa Dieselmotoren, betrieben werden. Sie erreichen eine gute NOx-Konvertierung bei Temperaturen von circa 200 bis 450°C, ohne dass die NOx-Konvertierung bei hohen Temperaturen negativ beeinflusst wird. Die erfindungsgemäßen Stickoxid-Speicherkatalysatoren sind somit für Euro 6 Anwendungen geeignet.
Die vorliegende Erfindung betrifft somit auch ein Verfahren zur Konvertierung von NOₓ in Abgasen von Kraftfahrzeugen, die mit mager betriebenen Motoren, etwa Dieselmotoren, betrieben werden, das dadurch gekennzeichnet ist, dass das Abgas über einen den erfindungsgemäßen Stickoxid-Speicherkatalysator geleitet wird

Ausgestaltungen des erfindungsgemäßen Verfahrens hinsichtlich des Stickoxid-Speicherkatalysators entsprechen den obenstehenden Beschreibungen.

Die vorliegende Erfindung betrifft des Weiteren ein Abgassystem, das
a) einen Stickoxid-Speicherkatalysator, der einen Tragköper und Washcoatschichten A, B, C und D umfasst, wobei
   - Washcoatschicht A auf dem Tragkörper angeordnet ist und Ceroxid, eine Erdalkaliverbindung und/oder eine Alkaliverbindung sowie Platin oder Platin und Palladium im Gewichtsverhältnis > 5 :1 enthält;
   - Washcoatschicht B auf Washcoatschicht A angeordnet ist und Ceroxid, sowie Platin oder Platin und Palladium im Gewichtsverhältnis > 5 :1 enthält und frei ist von Alkaliverbindungen und Verbindungen des Calciums, Strontiums und Bariums;
   - Washcoatschicht C auf Washcoatschicht B angeordnet ist und auf Ceroxid geträgertes Palladium oder Palladium und Platin im Gewichtsverhältnis > 2:1, sowie Rhodium umfasst; und
   - Washcoatschicht D auf Washcoatschicht C angeordnet ist und Platin oder Platin und Palladium umfasst.
   und
b) einen SCR-Katalysator
   umfasst.

Der SCR-Katalysator im erfindungsgemäßen Abgassystem kann prinzipiell ausgewählt sein aus allen in der SCR-Reaktion von Stickoxiden mit Ammoniak aktiven Katalysatoren, insbesondere aus solchen, die dem Fachmann auf dem Gebiet der Autoabgaskatalyse als gebräuchlich bekannt sind. Dies schließt Katalysatoren vom Mischoxid-Typ ebenso ein, wie Katalysatoren auf Basis von Zeolithen, insbesondere von Übergangsmetallausgetauschten Zeolithen, beispielsweise mit Kupfer, Eisen oder Kupfer und Eisen ausgetauschten Zeolithen.

In Ausführungsformen der vorliegenden Erfindung werden SCR-Katalysatoren, die einen kleinporigen Zeolithen mit einer maximalen Ringgröße von acht tetraedrischen Atomen und ein Übergangsmetall, beispielsweise Kupfer, Eisen oder Kupfer und Eisen, verwendet. Solche SCR-Katalysatoren sind beispielsweise in WO2008/106519 A1, WO2008/118434 A1 und WO2008/132452 A2 beschrieben.
Daneben können aber auch groß- und mittelporige Zeolithe verwendet werden, wobei insbesondere solche vom Strukturtyp BEA in Frage kommen. So sind Eisen-BEA und Kupfer-BEA von Interesse.

Besonders bevorzugte Zeolithe gehören den Gerüsttypen BEA, AEI, CHA, KFI, ERI, LEV, MER oder DDR an und sind besonders bevorzugt mit Kupfer, Eisen oder Kupfer und Eisen ausgetauscht.

Unter den Begriff Zeolithe fallen im Rahmen vorliegender Erfindung auch Molsiebe, die bisweilen auch als "zeolithähnliche" Verbindungen bezeichnet werden. Molsiebe sind bevorzugt, wenn sie einem der oben genannten Gerüsttypen angehören. Beispiele sind Silicaaluminiumphosphat-Zeolithe, die unter dem Begriff SAPO bekannt sind und Aluminiumphosphat-Zeolithe, die unter dem Begriff AIPO bekannt sind.
Auch diese sind insbesondere dann bevorzugt, wenn sie mit Kupfer, Eisen oder Kupfer und Eisen ausgetauscht sind.

Bevorzugte Zeolithe sind weiterhin solche, die einen SAR (silica-to-alumina ratio)-Wert von 2 bis 100, insbesondere von 5 bis 50, aufweisen.

Die Zeolithe bzw. Molsiebe enthalten Übergangsmetall insbesondere in Mengen von 1 bis 10 Gew.-%, insbesondere 2 bis 5 Gew.-%, berechnet als Metalloxid, also beispielsweise als Fe₂O₃ oder CuO.

Bevorzugte Ausführungsformen der vorliegenden Erfindung enthalten als SCR-Katalysatoren mit Kupfer, Eisen oder Kupfer und Eisen ausgetauschte Zeolithe oder Molsiebe vom Beta-Typ (BEA), Chabazit-Typ (CHA) oder vom Levyne-Typ (LEV). Entsprechende Zeolithe oder Molsiebe sind beispielsweise unter den Bezeichnungen ZSM-5, Beta, SSZ-13, SSZ-62, Nu-3, ZK-20, LZ-132, SAPO-34, SAPO-35, AIPO-34 und AIPO-35 bekannt, siehe etwa US 6,709,644 und US 8,617,474.

In einer Ausführungsform des erfindungsgemäßen Abgassystems befindet sich zwischen dem erfindungsgemäßen Katalysator und dem SCR-Katalysator eine Einspritzeinrichtung für Reduktionsmittel.
Die Einspritzvorrichtung kann vom Fachmann beliebig gewählt werden, wobei geeignete Vorrichtungen der Literatur entnommen werden können (siehe etwa T. Mayer, Feststoff-SCR-System auf Basis von Ammoniumcarbamat, Dissertation, TU Kaiserslautern, 2005). Der Ammoniak kann über die Einspritzvorrichtung als solches oder in Form einer Verbindung in den Abgasstrom eingebracht werden, aus der bei den Umgebungsbedingungen Ammoniak gebildet wird. Als solche kommen beispielsweise wässrige Lösungen von Harnstoff oder Ammoniumformiat in Frage, ebenso wie festes Ammoniumcarbamat. In der Regel wird das Reduktionsmittel bzw. ein Vorläufer davon in einem mitgeführten Behälter, der mit der Einspritzvorrichtung verbunden ist, vorrätig gehalten.

Der SCR-Katalysator liegt bevorzugt in Form einer Beschichtung auf einem Tragkörper vor, der ein Durchflusssubstrat oder ein Wandflussfilter sein und beispielsweise aus Silicium-Carbid, Aluminium-Titanat oder Cordierit bestehen kann.
Alternativ kann aber auch der Tragkörper selbst aus dem SCR-Katalysator und einer Matrixkomponente wie oben beschrieben bestehen, also in extrudierter Form vorliegen.

Die vorliegende Erfindung betrifft auch ein Verfahren zur Reinigung von Abgasen von Kraftfahrzeugen, die mit mager betriebenen Motoren, etwa Dieselmotoren, betrieben werden, das dadurch gekennzeichnet ist, dass das Abgas über ein erfindungsgemäßes Abgassystem geleitet wird.

Die Erfindung wird in den nachstehenden Beispielen und Figuren näher erläutert.

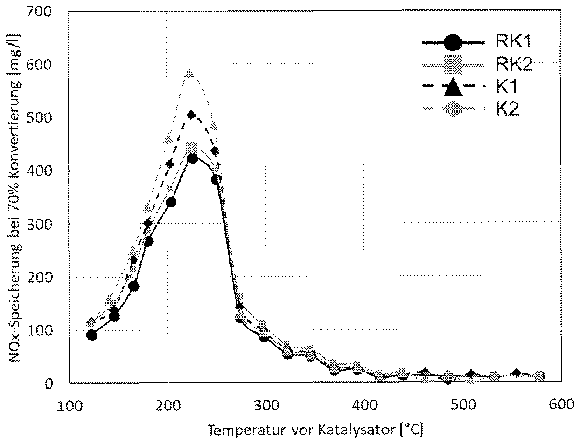

Figur 1 zeigt die NOx-Speicherkapazität bei 70% NOx-Konvertierung als Funktion der Temperatur vor Katalysator der Katalysatoren RK1, RK2, K1 und K2

### Vergleichsbeispiel 1

a) Für die Washcoatschicht A wurde eine wässerige Suspension hergestellt. Dabei wurden 0,7 g/l Platin bezogen auf das Volumen des Trägers und 0,07 g/l Palladium als Tetraethylammoniumhydroxid bzw. Nitrat-Salz zu einer wässerigen Suspension von 34 g/l Aluminiumoxid gegeben. Anschließend wurden 19,5 g/l Ceroxid belegt mit 17% BaO bezogen auf die Ceroxid-Menge und 45,5 g/l Ceroxid zur Suspension gegeben. 3 g/l Aluminiumoxid wurden als Alumina-Sol zugefügt. Anschließend wurde durch Tauchen eines Durchflussmonoliths 102,5 g/l Feststoff aufgebracht, getrocknet und 2h bei 550°C kalziniert.
b) Zur Herstellung der Beschichtungssuspension B wurden 0,7 g/l Platin als Tetraethylammoniumhydroxid und bezogen auf die Menge der Feststoffe der Suspension und 40 g/l Aluminiumoxid gemischt. Anschließend wurden 148 g/l Ceroxid, 0,07 g/l Palladium als Pd-Nitrat und 10 g/l Magnesiumoxid als Mg-Acetat dazugegeben. Eine Eisenoxid-Komponente wurde als vorfixiertes Pulver eingesetzt. Dazu wurde ein Aluminiumoxid mit 25 Gewichtsprozent Eisenoxid durch Imprägnieren von Aluminiumoxid mit Eisen-Nitrat-Lösung und anschließender Kalzinierung bei 550°C hergestellt. 20 g/l dieses Materials wurde in der Beschichtungssuspension verwendet. Zusätzlich wurden 8 g/l Aluminiumoxid und 0,18 g/l Rhodium als Rh-Nitrat zur Suspension gegeben. 227 g/l wurden als Washcoatschicht B auf die Washcoatschicht A aufgebracht. Anschließend wurde die Schicht getrocknet und 2h bei 550°C kalziniert.
c) Die Washcoatschicht C wurde hergestellt durch Mischen von 1,8 g/l Platin bezogen auf das Gewicht der Feststoffe in der Washcoat-Suspension C als Pt-Nitrat mit 0,18 g/l Palladium als Pd-Nitrat mit 70 g/l Aluminiumoxid. 72 g/l dieser Suspension wurden auf die Washcoatschicht B aufgebracht, getrocknet und anschließend 2h bei 550°C kalziniert.
Der so erhaltene Katalysator wird nachstehend RK1 genannt.

### Vergleichsbeispiel 2

Vergleichsbeispiel 1 wurde wiederholt mit dem Unterschied, dass in der Washcoatschicht B 50 g/l Ceroxid vor der Zugabe zur Washcoatdispersion B mit 0,5 Gewichtsprozent Palladium bezogen auf das Ceroxid belegt wurden, so dass die Schicht B 98 g/l Ceroxid und 50 g/l Pd belegtes Ceroxid enthielt. Der so erhaltene Katalysator wird nachstehend RK2 genannt.

### Beispiel 1

a) Zur Präparation eines erfindungsgemäßen Katalysators wurde die Washcoatschicht A wie in den Vergleichsbeispielen 1 und 2 beschichtet.
b) Zur Herstellung der Beschichtungssuspension B wurden 0,7 g/l Platin als Tetraethylammoniumhydroxid und bezogen auf die Menge der Feststoffe der Suspension und 40 g/l Aluminiumoxid gemischt. Anschließend wurden 100 g/l Ceroxid, 0,07 g/l Palladium als Pd-Nitrat und 10 g/l Magnesiumoxid als Mg-Acetat zugegeben. 3 g/l Aluminiumoxid wurden als Alumina-Sol zugefügt. 154 g/l wurden als Washcoatschicht B auf die Washcoatschicht A aufgebracht. Anschließend wurde die Schicht getrocknet und 2h bei 550°C kalziniert.
c) Zur Herstellung der Washcoatschicht C wurden 0,25 g/l Palladium als Pd-Nitrat in wässeriger Suspension auf 50 g/l Ceroxid adsorbiert. Zu dieser Suspension wurde eine Eisenoxid-Komponente als vorfixiertes Pulver hinzugefügt. Dazu wurde ein Aluminiumoxid mit 25 Gewichtsprozent Eisenoxid durch Imprägnieren von Aluminiumoxid mit Eisen-Nitrat-Lösung und anschließender Kalzinierung bei 550°C hergestellt. 20 g/l dieses Materials wurde in der Beschichtungssuspension verwendet. Zusätzlich wurden 5 g/l Aluminiumoxid und 0,18 g/l Rhodium als Rh-Nitrat zur Suspension gegeben. 75 g/l wurden als Washcoatschicht C auf die Washcoatschicht B aufgebracht. Anschließend wurde die Schicht getrocknet und 2h bei 550°C kalziniert. d) Washcoatschicht D entsprach der Washcoatschicht C in den Vergleichsbeispielen 1 und 2.
Der so erhaltene Katalysator wird nachstehend K1 genannt.

### Beispiel 2

Beispiel 2 wurde wiederholt mit dem Unterschied, dass die Washcoatschicht B 0,65 g/l Platin und die Washcoatschicht C zusätzlich 0,05 g/l Platin enthielt.
Der so erhaltene Katalysator wird nachstehend K2 genannt.

### Testung:

Zur Testung der Katalysatoraktivität der Katalysatoren RK1, RK2, K1 und K2 wurden die Proben zunächst einer thermischen Vorbehandlung für 16h bei 800°C in einer Atmosphäre aus 10% Sauerstoff, 10% Wasser und Rest Stickstoff ausgesetzt.
Anschließend wurden sie auf 650°C aufgeheizt und bei mit 7,5 pro Minute fallender Temperatur der Gaszusammensetzung gemäß Tab. 1 ausgesetzt, wobei 150 Sekunden die magere (oxidierende) und 30 Sekunden die fette (reduzierende) Gasatmosphäre über die Katalysatorprobe geleitet wurde. Mittels FTIR wurde die NOx-Konzentration im Gasstrom hinter dem Katalysator gemessen.

**Tab. 1: Gaszusammensetzung des Katalyatoraktivitätstests**

| | mager | fett |
|---|---|---|
| GHSV [1/h] | 50000 | 50000 |
| NO [ppm] | 500 | 500 |
| NO₂ [ppm] | 0 | 0 |
| O₂ [vol%] | 8 | 0,7 |
| CO [vol%] | 0 | 2,23 |
| H₂ [vol%] | 0 | 0,67 |
| HC [ppm C₃] (C₃H₆/C₃H₈) | 746 (373/373) | 746 (373/373) |
| CO₂ [vol%] | 13,3 | 13,3 |
| HO [vol%] | 10 | 10 |

Zur Bestimmung der NOx-Konvertierungsaktivität wurde für jede Magerphase die gespeicherte NOx-Masse in mg pro Katalysatorvolumen bestimmt, wenn die NOx-Konvertierung einen Wert von 70% erreicht hatte. Die NOx-Konvertierung errechnet sich mit folgender Formel: NOx-Konvertierung [%] = 100 x (c(NOxᵢₙ) - c(NOxₒᵤₜ)) / c(NOxₒᵤₜ)
Die eingespeicherte NOx-Masse berechnet sich aus der Differenz der NOx-Masse im Gas vor Katalysator und der NOx-Masse im Gas nach Katalysator vom Start der Magerphase bis zu dem Zeitpunkt bei dem 70% NOx-Konvertierung erreicht sind.
Figur 1 zeigt die NOx-Speicherwerte bei 70%-NOx-Konvertierung als Funktion der Temperatur für die Referenzkatalysatoren RK1 und RK2 sowie der erfindungsgemäßen Katalysatoren K1 und K2. Im Bereich von 175 bis 250°C wird mit dem 4-Schicht-Design der erfindungsgemäßen Katalysatoren eine höhere NOx-Speichermenge erreicht. Die Verwendung von Palladium und Platin in Katalysator K2 führt zu einer zusätzlichen Erhöhung der NOx-Speichermenge.Patentansprüche

## Patentansprüche

1. Stickoxid-Speicherkatalysator, der einen Tragköper und Washcoatschichten A, B, C und D umfasst, wobei
- Washcoatschicht A auf dem Tragkörper angeordnet ist und Ceroxid, eine Erdalkaliverbindung und/oder eine Alkaliverbindung sowie Platin oder Platin und Palladium im Gewichtsverhältnis > 5 :1 enthält;
- Washcoatschicht B auf Washcoatschicht A angeordnet ist und Ceroxid, sowie Platin oder Platin und Palladium im Gewichtsverhältnis > 5 :1 enthält und frei ist von Alkaliverbindungen und Verbindungen des Calciums, Strontiums und Bariums;
- Washcoatschicht C auf Washcoatschicht B angeordnet ist und auf Ceroxid geträgertes Palladium oder Palladium und Platin im Gewichtsverhältnis > 2:1, sowie Rhodium umfasst; und
- Washcoatschicht D auf Washcoatschicht C angeordnet ist und Platin oder Platin und Palladium umfasst.

2. Stickoxid-Speicherkatalysator nach Anspruch 1, **dadurch gekennzeichnet, dass** Washcoatschicht B frei von Alkali- und Erdalkaliverbindungen ist.

3. Stickoxid-Speicherkatalysator nach Anspruch 1, **dadurch gekennzeichnet, dass** Washcoatschicht B Magnesiumoxid (MgO) umfasst.

4. Stickoxid-Speicherkatalysator nach Anspruch 3, **dadurch gekennzeichnet, dass** Washcoatschicht B Magnesiumoxid in Mengen von 3 bis 20 g/l, bezogen auf das Volumen des Tragkörpers, umfasst.

5. Stickoxid-Speicherkatalysator nach einem oder mehreren der Ansprüche 1 bis 4, **dadurch gekennzeichnet, dass** Washcoatschicht A Ceroxid in einer Menge von 110 bis 160 g/l, bezogen auf das Volumen des Tragkörpers, umfasst.

6. Stickoxid-Speicherkatalysator nach einem oder mehreren der Ansprüche 1 bis 5, **dadurch gekennzeichnet, dass** Washcoatschicht B Ceroxid in einer Menge von 22 bis 120 g/l, bezogen auf das Volumen des Tragkörpers, umfasst.

7. Stickoxid-Speicherkatalysator nach einem oder mehreren der Ansprüche 1 bis 6, **dadurch gekennzeichnet, dass** die Washcoatschichten A und B zu einer einzigen Washcoatschicht AB, die Ceroxid, eine Erdalkaliverbindung und/oder eine Alkaliverbindung sowie Platin oder Platin und Palladium im Gewichtsverhältnis > 5 :1 umfasst, zusammengefasst sind.

8. Stickoxid-Speicherkatalysator nach Anspruch 7, **dadurch gekennzeichnet, dass** Washcoatschicht AB Ceroxid in einer Menge von 132 bis 280 g/l, bezogen auf das Volumen des Tragkörpers, umfasst.

9. Stickoxid-Speicherkatalysator nach einem oder mehreren der Ansprüche 1 bis 8, **dadurch gekennzeichnet, dass** Washcoatschicht C Ceroxid in einer Menge von 20 bis 120 g/l, bezogen auf das Volumen des Tragkörpers, umfasst.

10. Stickoxid-Speicherkatalysator nach einem oder mehreren der Ansprüche 1 bis 9, **dadurch gekennzeichnet, dass** in Washcoatschicht A die Erdalkaliverbindung ein Oxid, Carbonat und/oder Hydroxid von Magnesium, Strontium und/oder Barium ist.

11. Stickoxid-Speicherkatalysator nach einem oder mehreren der Ansprüche 1 bis 10, **dadurch gekennzeichnet, dass** die Erdalkali- bzw. Alkaliverbindung in Washcoatschicht A in Mengen von 10 bis 50 g/l, berechnet als Erdalkali- bzw. Alkalioxid und bezogen auf das Volumen des Tragkörpers, vorliegt.

12. Stickoxid-Speicherkatalysator nach einem oder mehreren der Ansprüche 1 bis 11, **dadurch gekennzeichnet, dass** Washcoatschicht C eine Eisenverbindung umfasst.

13. Stickoxid-Speicherkatalysator nach Anspruch 12, **dadurch gekennzeichnet, dass** die Eisenverbindung Eisenoxid ist.

14. Stickoxid-Speicherkatalysator nach Anspruch 12 und/oder 13, **dadurch gekennzeichnet, dass** in Washcoatschicht C Eisenoxid in Mengen von 1 bis 10 Gew.-%, bezogen auf das Gewicht der Washcoatschicht C und gerechnet als Fe₂O₃, vorliegt.

15. Stickoxid-Speicherkatalysator nach einem oder mehreren der Ansprüche 1 bis 14, **dadurch gekennzeichnet, dass** Washcoatschicht A frei von Rhodium ist.

16. Verfahren zur Konvertierung von NOₓ in Abgasen von Kraftfahrzeugen, die mit mager betriebenen Motoren betrieben werden, **dadurch gekennzeichnet, dass** das Abgas über einen Stickoxid-Speicherkatalysator gemäß einem oder mehreren der Ansprüche 1 bis 16 geleitet wird.

17. Abgassystem, das
a) einen Stickoxid-Speicherkatalysator, der einen Tragköper und Washcoatschichten A, B, C und D umfasst, wobei
- Washcoatschicht A auf dem Tragkörper angeordnet ist und Ceroxid, eine Erdalkaliverbindung und/oder eine Alkaliverbindung sowie Platin oder Platin und Palladium im Gewichtsverhältnis > 5 :1 enthält;
- Washcoatschicht B auf Washcoatschicht A angeordnet ist und Ceroxid, sowie Platin oder Platin und Palladium im Gewichtsverhältnis > 5 :1 enthält und frei ist von Alkaliverbindungen und Verbindungen des Calciums, Strontiums und Bariums;
- Washcoatschicht C auf Washcoatschicht B angeordnet ist und auf Ceroxid geträgertes Palladium oder Palladium und Platin im Gewichtsverhältnis > 2:1, sowie Rhodium umfasst; und
- Washcoatschicht D auf Washcoatschicht C angeordnet ist und Platin oder Platin und Palladium umfasst
und
b) einen SCR-Katalysator umfasst.

## Claims

1. Nitrogen oxide storage catalyst comprising a supporting body and washcoat layers A, B, C and D, wherein
- washcoat layer A is disposed on the supporting body and contains cerium oxide, an alkaline earth metal compound, and/or an alkali metal compound, as well as platinum or platinum and palladium in a weight ratio of > 5:1;
- washcoat layer B is disposed on washcoat layer A and contains cerium oxide and platinum or platinum and palladium in a weight ratio of > 5:1 and is free of alkali metal compounds and compounds of calcium, strontium and barium;
- washcoat layer C is disposed on washcoat layer B and comprises cerium-oxide-supported palladium or palladium and platinum in a weight ratio of > 2:1, as well as rhodium; and
- washcoat layer D is disposed on washcoat layer C and comprises platinum or platinum and palladium.

2. Nitrogen oxide storage catalyst according to claim 1, **characterized in that** washcoat layer B is free of alkali metal compounds and alkaline earth metal compounds.

3. Nitrogen oxide storage catalyst according to claim 1, **characterized in that** washcoat layer B comprises magnesium oxide (MgO).

4. Nitrogen oxide storage catalyst according to claim 3, **characterized in that** washcoat layer B comprises magnesium oxide in quantities of 3 to 20 g/l in relation to the volume of the supporting body.

5. Nitrogen oxide storage catalyst according to one or more of claims 1 to 4, **characterized in that** washcoat layer A comprises cerium oxide in a quantity of 110 to 160 g/l in relation to the volume of the supporting body.

6. Nitrogen oxide storage catalyst according to one or more of claims 1 to 5, **characterized in that** washcoat layer B comprises cerium oxide in a quantity of 22 to 120 g/l in relation to the volume of the supporting body.

7. Nitrogen oxide storage catalyst according to one or more of claims 1 to 6, **characterized in that** washcoat layers A and B are combined to form a single washcoat layer AB, which comprises cerium oxide, an alkaline earth metal compound and/or an alkali metal compound as well as platinum or platinum and palladium in a weight ratio of > 5:1.

8. Nitrogen oxide storage catalyst according to claim 7, **characterized in that** washcoat layer AB comprises cerium oxide in a quantity of 132 to 280 g/l in relation to the volume of the supporting body.

9. Nitrogen oxide storage catalyst according to one or more of claims 1 to 8, **characterized in that** washcoat layer C comprises cerium oxide in a quantity of 20 to 120 g/l in relation to the volume of the supporting body.

10. Nitrogen oxide storage catalyst according to one or more of claims 1 to 9, **characterized in that** the alkaline earth metal compound in washcoat layer A is an oxide, carbonate, and/or hydroxide of magnesium, strontium, and/or barium.

11. Nitrogen oxide storage catalyst according to one or more of claims 1 to 10, **characterized in that** the alkaline earth metal compound or alkali metal compound in washcoat layer A is present in quantities of 10 to 50 g/l, calculated as alkaline earth metal oxide or alkali metal oxide and in relation to the volume of the supporting body.

12. Nitrogen oxide storage catalyst according to one or more of claims 1 to 11, **characterized in that** washcoat layer C comprises an iron compound.

13. Nitrogen oxide storage catalyst according to claim 12, **characterized in that** the iron compound is iron oxide.

14. Nitrogen oxide storage catalyst according to claim 12 and/or 13, **characterized in that** iron oxide is present in washcoat layer C in quantities of 1 to 10 wt.%, in relation to the weight of washcoat layer C and calculated as Fe₂O₃.

15. Nitrogen oxide storage catalyst according to one or more of claims 1 to 14, **characterized in that** washcoat layer A is free of rhodium.

16. Method for converting NOₓ in exhaust gases of motor vehicles that are operated with lean-burn engines, **characterized in that** the exhaust gas is guided over a nitrogen oxide storage catalyst according to one or more of claims 1 to 16.

17. Exhaust gas system comprising
a) a nitrogen oxide storage catalyst which comprises a supporting body and washcoat layers A, B, C and D, wherein
- washcoat layer A is disposed on the supporting body and contains cerium oxide, an alkaline earth metal compound, and/or an alkali metal compound, as well as platinum or platinum and palladium in a weight ratio of > 5:1;
- washcoat layer B is disposed on washcoat layer A and contains cerium oxide and platinum or platinum and palladium in a weight ratio of > 5:1 and is free of alkali metal compounds and compounds of calcium, strontium and barium;
- washcoat layer C is disposed on washcoat layer B and comprises cerium-oxide-supported palladium or palladium and platinum in a weight ratio of > 2:1, as well as rhodium; and
- washcoat layer D is disposed on washcoat layer C and comprises platinum or platinum and palladium
and
b) an SCR catalyst.

## Revendications

1. Catalyseur accumulateur d'oxyde d'azote, lequel comprend un corps de support et des couches d'imprégnation (washcoat) A, B, C et D, dans lequel
- la couche d'imprégnation A est disposée sur le corps de support et contient de l'oxyde de cérium, un composé alcalino-terreux et/ou un composé alcalin, ainsi que du platine ou du platine et du palladium dans un rapport pondéral > 5:1 ;
- la couche d'imprégnation B est disposée sur la couche d'imprégnation A et contient de l'oxyde de cérium, ainsi que du platine ou du platine et du palladium dans un rapport pondéral > 5:1 et est exempte de composés alcalins et de composés de calcium, de strontium et de baryum ;
- la couche d'imprégnation C est disposée sur la couche d'imprégnation B et comprend du palladium porté sur l'oxyde de cérium ou du palladium et du platine dans un rapport pondéral > 2:1, ainsi que du rhodium ; et
- la couche d'imprégnation D est disposée sur la couche d'imprégnation C et comprend du platine ou du platine et du palladium.

2. Catalyseur accumulateur d'oxyde d'azote selon la revendication 1, **caractérisé en ce que** la couche d'imprégnation B est exempte de composés alcalins et alcalino-terreux.

3. Catalyseur accumulateur d'oxyde d'azote selon la revendication 1, **caractérisé en ce que** la couche d'imprégnation B comprend de l'oxyde de magnésium (MgO).

4. Catalyseur accumulateur d'oxyde d'azote selon la revendication 3, **caractérisé en ce que** la couche d'imprégnation B comprend de l'oxyde de magnésium en des quantités de 3 à 20 g/l, rapporté au volume du corps de support.

5. Catalyseur accumulateur d'oxyde d'azote selon au moins l'une quelconque des revendications 1 à 4, **caractérisé en ce que** la couche d'imprégnation A comprend de l'oxyde de cérium en une quantité de 110 à 160 g/l, rapporté au volume du corps de support.

6. Catalyseur accumulateur d'oxyde d'azote selon au moins l'une quelconque des revendications 1 à 5, **caractérisé en ce que** la couche d'imprégnation B comprend de l'oxyde de cérium en une quantité de 22 à 120 g/l, rapporté au volume du corps de support.

7. Catalyseur accumulateur d'oxyde d'azote selon au moins l'une quelconque des revendications 1 à 6, **caractérisé en ce que** les couches d'imprégnation A et B sont unies de manière à former une seule couche d'imprégnation AB, laquelle comprend de l'oxyde de cérium, un composé alcalino-terreux et/ou un composé alcalin, ainsi que du platine ou du platine et du palladium dans un rapport pondéral > 5:1.

8. Catalyseur accumulateur d'oxyde d'azote selon la revendication 7, **caractérisé en ce que** la couche d'imprégnation AB comprend de l'oxyde de cérium en une quantité de 132 à 280 g/l, rapporté au volume du corps de support.

9. Catalyseur accumulateur d'oxyde d'azote selon au moins l'une quelconque des revendications 1 à 8, **caractérisé en ce que** la couche d'imprégnation C comprend de l'oxyde de cérium en une quantité de 20 à 120 g/l, rapporté au volume du corps de support.

10. Catalyseur accumulateur d'oxyde d'azote selon au moins l'une quelconque des revendications 1 à 9, **caractérisé en ce que** dans la couche d'imprégnation A, le composé alcalino-terreux est un oxyde, un carbonate et/ou un hydroxyde de magnésium, de strontium et/ou de baryum.

11. Catalyseur accumulateur d'oxyde d'azote selon au moins l'une quelconque des revendications 1 à 10, **caractérisé en ce que** le composé alcalino-terreux ou alcalin dans la couche d'imprégnation A est présent en des quantités de 10 à 50 g/l, exprimé en oxyde alcalino-terreux ou alcalin et rapporté au volume du corps de support.

12. Catalyseur accumulateur d'oxyde d'azote selon au moins l'une quelconque des revendications 1 à 11, **caractérisé en ce que** la couche d'imprégnation C comprend un composé de fer.

13. Catalyseur accumulateur d'oxyde d'azote selon la revendication 12, **caractérisé en ce que** le composé de fer est l'oxyde de fer.

14. Catalyseur accumulateur d'oxyde d'azote selon la revendication 12 et/ou 13, **caractérisé en ce que** de l'oxyde de fer est présent dans la couche d'imprégnation C en des quantités de 1 à 10 % en poids, rapporté au poids de la couche d'imprégnation C et exprimé en Fe₂O₃.

15. Catalyseur accumulateur d'oxyde d'azote selon au moins l'une quelconque des revendications 1 à 14, **caractérisé en ce que** la couche d'imprégnation A est exempte de rhodium.

16. Procédé de conversion de NOₓ dans des gaz d'échappement de véhicules automobiles, lesquels fonctionnent avec des moteurs à mélange pauvre, **caractérisé en ce que** les gaz d'échappement sont dirigés à travers un catalyseur accumulateur d'oxyde d'azote selon au moins l'une quelconque des revendications 1 à 16.

17. Système de gaz d'échappement, lequel comprend
a) un catalyseur accumulateur d'oxyde d'azote, lequel comprend un corps de support et des couches d'imprégnation A, B, C et D, dans lequel
- la couche d'imprégnation A est disposée sur le corps de support et contient de l'oxyde de cérium, un composé alcalino-terreux et/ou un composé alcalin, ainsi que du platine ou du platine et du palladium dans un rapport pondéral > 5:1 ;
- la couche d'imprégnation B est disposée sur la couche d'imprégnation A et contient de l'oxyde de cérium, ainsi que du platine ou du platine et du palladium dans un rapport pondéral > 5:1 et est exempte de composés alcalins et de composés de calcium, de strontium et de baryum ;
- la couche d'imprégnation C est disposée sur la couche d'imprégnation B et comprend du palladium porté sur l'oxyde de cérium ou du palladium et du platine dans un rapport pondéral > 2:1, ainsi que du rhodium ; et
- la couche d'imprégnation D est disposée sur la couche d'imprégnation C et comprend du platine ou du platine et du palladium,
et
b) un catalyseur SCR.
